# EUROPEAN PATENT APPLICATION

(11) **EP 4 819 241 A1**
(43) Date of publication of application: **07.10.2026**
(21) Application number: 24955913.9
(22) Date of filing: 29.10.2024
(51) Int. Cl.: H01M 4/505, H01M 4/525, H01M 4/131, H01M 10/0525, H01M 4/36

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 30.09.2024 CN 202411392072
(71) Applicant: Beijing Easpring Material Technology Co., Ltd., Beijing 100160 (CN)
(72) Inventor: RU, Minchao, Beijing 100160 (CN); WANG, Jun, Beijing 100160 (CN); ZHAO, Xiaolang, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/127953
(87) International publication number: WO 2026/065637

(57) **Abstract**

Provided are a cathode active material and a method for preparing same, a cathode plate, a battery, and an electrical device. The cathode active material, after being soaked in an acidic solution for 2 hours, has a BET specific surface area ranging from 1.75 m²/g to 4 m²/g and a porosity ranging from 2.6% to 6.5%. A weight ratio of the cathode active material to the acidic solution is 1:10. A pH of the acidic solution is 5.5. Thus, the cathode active material provided by the present disclosure possesses both a higher compaction density and satisfactory cycling performance.

## Description

### FIELD

The present disclosure relates to the field of batteries, and specifically, to a cathode active material and a method for preparing same, a cathode plate, a battery, and an electrical device.

### BACKGROUND

A lithium-rich manganese-based cathode material has become a research hotspot in the field of cathodes for lithium-ion battery due to its characteristics such as high specific capacity and high energy density. The lithium-rich manganese-based cathode material contains elements such as Ni, Co, and Mn, and has a specific capacity exceeding 240 mAh/g, an average voltage higher than 3.5 V, and an energy density higher than those of layered LiMO₂, spinel LiMn₂O₄, and olivine LiFePO₄. Therefore, a lithium-rich manganese-based cathode active material is regarded as a preferred material for the active materials of next-generation lithium-ion battery cathode. However, a cathode active material in the related art cannot take into account both its cycling performance and volumetric energy density.

### SUMMARY

The present disclosure aims to solve at least one of the technical problems in the related art to some extent.

In a first aspect of the present disclosure, a cathode active material is provided. The cathode active material is secondary particles formed by agglomerated primary particles. The secondary particles have pores. The cathode active material, after being soaked in an acidic solution for 2 hours, has A BET specific surface area ranging from 1.75 m²/g to 4 m²/g and a porosity ranging from 2.6% to 6.5%. A weight ratio of the cathode active material to the acidic solution is 1:10. A pH of the acidic solution is 5.5. Thus, the cathode active material provided by the present disclosure, after being soaked in the acidic solution, can have a larger specific surface area while maintaining a lower porosity, increasing an energy density of a battery and improving cycling performance of the battery.

According to some embodiments of the present disclosure, the pores of the secondary particles of the cathode active material after being soaked in the acidic solution have an average pore diameter ranging from 9 nm to 25 nm. Thus, the cathode active material can have the larger specific surface area while maintaining the lower porosity, increasing a compaction density of the cathode active material.

According to some embodiments of the present disclosure, a proportion of pores having a pore diameter smaller than or equal to 10 nm ranges from 50% to 80%. Thus, the specific surface area of the cathode active material is increased, and the cycling performance of the battery is improved.

According to some embodiments of the present disclosure, the cathode active material has a compaction density ranging from 2.7 g/cm³ to 3.2 g/cm³. Thus, the energy density of the battery is increased.

According to some embodiments of the present disclosure, the cathode active material satisfies: *η*=FWHM(104)/FWHM(003), where 1.75≤*η*≤2.8, and optionally, 1.85≤*η*≤2.1. FWHM(104) is a full width at half maximum of a diffraction peak (104) in an X-ray diffraction pattern, the diffraction peak (104) corresponding to a 2θ value in a range of 43.5° to 45.5°. FWHM(003) is a full width at half maximum of a diffraction peak (003) in the X-ray diffraction pattern, the diffraction peak (003) corresponding to a 2θ value in a range of 17.5° to 19.5°. Thus, lattice integrity of the cathode active material is improved, and cycling stability of the cathode active material is improved.

According to some embodiments of the present disclosure, the cathode active material includes a compound represented by Formula I: Li_{1+δ}(Niₓ₍₁₋ₐ₎Co_{y(1-a)}Li_{(1-2x-y)(1-a)/3}Mn_{(2-x-y)(1-a)/3}M¹ₐM²_{b})O_{(2+δ/2)}Nₙ Formula I, where 0.02≤δ≤0.08, 0.25≤x≤0.45, 0≤y≤0.1, 0≤a≤0.035, 0≤b≤0.04, 0≤n≤0.04, M¹ includes at least one of Al, Zr, Y, Mg, Ti, W, Si, Yb, Nb, Sc, Ca, La, Sr, or Y, M² includes at least one of B, Mg, Al, Ti, V, Sr, Y, Zr, Nb, Mo, Sc, Cr, La, Sr, or W, and N includes at least one of F, S, P, or O.

According to some embodiments of the present disclosure, at least one of the following conditions is satisfied: 0.03≤δ≤0.06; 0.001≤a≤0.02; 0.001≤b≤0.02; or 0≤n≤0.02.

According to some embodiments of the present disclosure, at least part of a surface of each of the secondary particles is coated with a coating layer, preferably, the coating layer includes element M². Thus, excessive erosion of the cathode active material by an electrolyte solution is reduced, and the cycling performance of the battery is improved.

In a second aspect of the present disclosure, a method for preparing a cathode active material is provided. The method includes: mixing a Ni source, a Co source, a Mn source, a complexing agent, and a precipitant to form a first mixed solution, stirring and performing co-precipitation on the first mixed solution, followed by drying, to obtain a lithium-rich manganese-based precursor, in which a pH of the first mixed solution ranges from 9 to 11.5, and a rotational speed of the stirring ranges from 500 rpm to 900 rpm; mixing the lithium-rich manganese-based precursor, a lithium source, and an M¹ source, and performing a first sintering on the mixture, to obtain a first in-process product; mixing the first in-process product, an M² source, and a solvent to form a second mixed solution, performing a solid-liquid separation, and drying a solid phase substance, to obtain a second in-process product, in which a solid-liquid ratio of the first in-process product to the solvent ranges from 0.5 g/mL to 3 g/mL; and performing a second sintering on the second in-process product, to obtain the cathode active material. A temperature of the second sintering is lower than or equal to a temperature of the first sintering.

Thus, by controlling the pH of the first mixed solution and the rotational speed of the stirring within the above ranges, the primary particles of the cathode active material also have satisfactory multidirectionality. Further, by controlling the solid-liquid ratio during formation of the second mixed solution, soluble residual substances in micropores between the primary particles can be discharged to an outside of the secondary particles, in such a manner that more micropores are formed inside the secondary particles without destroying a lattice structure, obtaining the cathode active material that possesses both satisfactory cycling performance and higher volumetric energy density.

According to some embodiments of the present disclosure, the solid-liquid ratio of the first in-process product to the solvent ranges from 1.0 g/mL to 3 g/mL.

According to some embodiments of the present disclosure, the method satisfies at least one of the following conditions: a temperature of the second mixed solution ranges from 5°C to 35°C; or said mixing the first in-process product, the M² source, and the solvent is performed in a time period ranging from 30 seconds to 1,200 seconds, and optionally 60 seconds to 600 seconds. Thus, micropores can be effectively obtained without destroying the lattice structure of the cathode active material.

According to some embodiments of the present disclosure, 1.12≤n_{(Li)}/(n_{(Ni)}+n_{(Co)}+n_{(Mn)}+n_{(M1)})≤1.49. Thus, lattice integrity of the cathode active material is improved, which improves the cycling stability of the cathode active material.

According to some embodiments of the present disclosure, 0≤n_{(M2)}/(n_{(Ni)}+n_{(Co)}+n_{(Mn)}+n_{(M1)})≤0.04, and optionally, 0.001≤n_{(M2)}/(n_{(Ni)}+n_{(Co)}+n_{(Mn)}+n_{(M1)})≤0.02. Thus, performing appropriate coating on a surface of the cathode active material can not only reduce corrosion of the cathode active material by the electrolyte solution and improve the cycling performance, but also improve conductivity of the secondary particles and enhance a capacity of the cathode active material.

According to some embodiments of the present disclosure, the method satisfies at least one of the following conditions: the temperature of the first sintering is T₁, satisfying 800°C≤T₁≤980°C; a duration of the first sintering is t₁, satisfying 5 hours≤t₁≤15 hours; or a heating rate of the first sintering is V₁, satisfying 1.3°C/minute≤V₁≤10°C/minute. Thus, a satisfactory crystal structure can be obtained.

According to some embodiments of the present disclosure, the method satisfies at least one of the following conditions: the temperature of the second sintering is T₂, satisfying 300°C≤T₂≤800°C; or a duration of the second sintering is t₂, satisfying 6 hours≤t₂≤20 hours. Thus, a satisfactory crystal structure is obtained.

In a third aspect of the present disclosure, a cathode plate is provided. The cathode plate includes the cathode active material in the first aspect of the present disclosure or a cathode active material prepared by the method in the second aspect of the present disclosure.

In a fourth aspect of the present disclosure, a battery is provided. The battery includes the cathode plate in the third aspect of the present disclosure.

In a fifth aspect of the present disclosure, an electrical device is provided. The electrical device includes the battery in the fourth aspect of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.

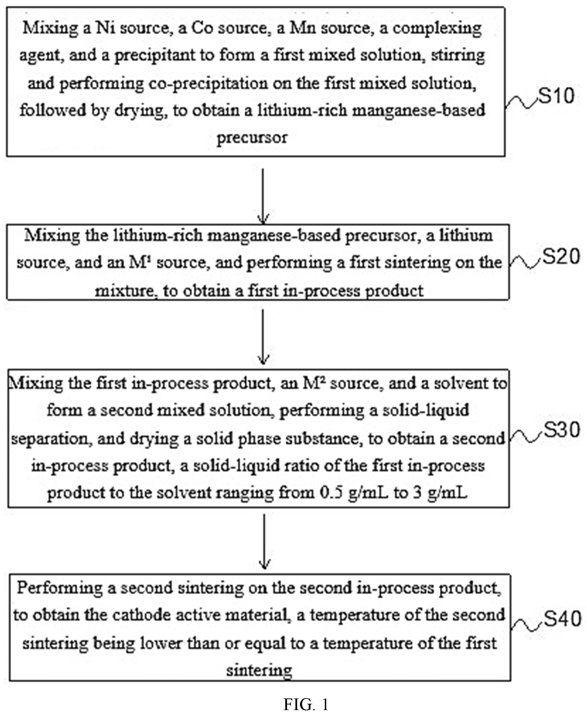

FIG. 1 illustrates a schematic flowchart of a method for preparing a cathode active material according to an embodiment of the present disclosure.

### DETAILED DESCRIPTION

Embodiments of the present disclosure are described in detail below. The embodiments described below are exemplary and are only used to explain the present disclosure, and should not be construed as limiting the present disclosure. Where specific techniques or conditions are not indicated in the embodiments, the procedures shall be carried out in accordance with the techniques or conditions described in the literature in the field or in accordance with the product specification. The reagents or instruments used without the indication of the manufacturers are all conventional products that can be purchased commercially.

For a lithium-rich manganese-based cathode active material, increasing a specific surface area of the lithium-rich manganese-based cathode active material enables sufficient contact between the lithium-rich manganese-based cathode active material and an electrolyte solution, which promotes an interfacial reaction between the lithium-rich manganese-based cathode active material and the electrolyte solution, and improves cycling performance of a battery. However, in the related art, an increase in the specific surface area of the lithium-rich manganese-based cathode active material is accompanied by an increase in a porosity. After the porosity increases, a compaction density of the lithium-rich manganese-based cathode active material decreases accordingly, compromising an energy density of the battery. That is, it is impossible to obtain a lithium-rich manganese-based cathode active material that possesses both higher energy density and satisfactory cycling performance.

In a first aspect of the present disclosure, a cathode active material is provided. The cathode active material is secondary particles formed by agglomerated primary particles. The secondary particles have pores. The cathode active material, after being soaked in an acidic solution for 2 hours, has a BET specific surface area ranging from 1.75 m²/g to 4 m²/g and a porosity ranging from 2.6% to 6.5%. A weight ratio of the cathode active material to the acidic solution is 1:10. A pH of the acidic solution is 5.5.

During an operation of the battery, the cathode active material is fully wetted by the electrolyte solution. Thus, an interior of the secondary particles is eroded by the electrolyte solution, creating new pores inside the secondary particles. Both the porosity and a specific surface area of the cathode active material increase with an appearance of new pores. The BET and the porosity of the cathode active material provided in the present disclosure after being soaked in the acidic solution can truly reflect properties of a tested material in the electrolyte solution. In the present disclosure, by keeping the BET specific surface area and the porosity of the cathode active material after being soaked in the acidic solution within the above ranges, the cathode active material, after being fully wetted by the electrolyte solution, can have a larger specific surface area while maintaining a lower porosity during an operation of the battery, shortening a diffusion path of lithium ions in the cathode active material and increasing a gram capacity of the cathode active material.

The larger specific surface area of the cathode active material after being soaked in the acidic solution enables more sufficient contact between the cathode active material and the electrolyte solution, which can promote an interfacial reaction between the cathode active material and the electrolyte solution, and improve the cycling performance of the battery. In addition, since the porosity of the cathode active material after being fully wetted by the electrolyte solution is still maintained at a lower level, it is unnecessary to adopt a smaller compaction density to pursue the larger specific surface area of the cathode active material during plate coating and rolling stages. That is, the cathode active material can have the larger specific surface area during battery cycling, without reducing a compaction density of a cathode plate, obtaining a battery that possesses both satisfactory cycling performance and higher energy density.

As an example, the cathode active material after being soaked in the acidic solution has the BET specific surface area ranging from 1.75 m²/g to 4 m²/g. For example, the BET specific surface area may be 1.75 m²/g, 2 m²/g, 2.5 m²/g, 3 m²/g, 3.5 m²/g, 4 m²/g, etc., or may be a range composed of any of the above values.

In the present disclosure, a test method for the BET specific surface area includes: soaking the cathode active material in the acidic solution for 2 hours, in which the weight ratio of the cathode active material to the acidic solution is 1:10, and the pH of the acidic solution is 5.5; performing drying at 120°C in a vacuum atmosphere subsequent to a completion of the soaking; and performing testing using a specific surface area analyzer of model Tristar 3020 from Micromeritics.

As an example, the porosity of the cathode active material after being soaked in the acidic solution may be 2.6%, 3%, 3.5%, 4%, 4.5%, 5%, 5.5%, 6%, 6.5%, etc., or may be a range composed of any of the above values.

In the present disclosure, the porosity of the cathode active material may be obtained by testing using the specific surface area analyzer of model Tristar 3020 from Micromeritics.

According to some embodiments of the present disclosure, the pores of the secondary particles of the cathode active material after being soaked in the acidic solution have an average pore diameter ranging from 9 nm to 25 nm. For example, the average pore diameter may be 9 nm, 13 nm, 17 nm, 21 nm, 25 nm, etc., or may be a range composed of any of the above values. Thus, when the cathode active material has the smaller average pore diameter, the lower porosity, and the larger specific surface area, the cathode active material can possess both high compaction density and satisfactory cycling performance can be obtained.

In the present disclosure, the specific surface area analyzer of model Tristar 3020 from Micromeritics is used for testing. A pore diameter distribution during desorption is calculated using a BJH method.

According to some embodiments of the present disclosure, a proportion of pores having a pore diameter smaller than or equal to 10 nm ranges from 50% to 80%. For example, the proportion may be 50%, 60%, 70%, 80%, etc., or may be a range composed of any of the above values. The specific surface area of the cathode active material increases as the pore diameter decreases. A larger number of small-sized pores can increase the specific surface area of the cathode active material, promoting the interfacial reaction between the cathode active material and the electrolyte solution, and improving the cycling performance of the battery.

It should be noted that the proportion of pores having the pore diameter smaller than or equal to 10 nm refers to a proportion of a total specific surface area of pores having the pore diameter smaller than or equal to 10 nm in a total specific surface area of the secondary particles.

According to some embodiments of the present disclosure, the cathode active material satisfies: *η*=FWHM(104)/FWHM(003), where 1.75≤*η*≤2.8. FWHM(104) is a full width at half maximum of a diffraction peak (104) in an X-ray diffraction pattern. The diffraction peak (104) corresponds to a 2θ value in a range of 43.5° to 45.5°. FWHM(003) is a full width at half maximum of a diffraction peak (003) in the X-ray diffraction pattern. The diffraction peak (003) corresponds to a 2θ value in a range of 17.5° to 19.5°. For example, *η* may be 1.75, 1.8, 2, 2.2, 2.4, 2.6, 2.8, etc., or may be a range composed of any of the above values.

In the X-ray diffraction pattern of a cathode material, symmetry of a (003) plane is more obvious than that of a (104) plane. When a ratio of FWHM(104)/FWHM(003) is within the range defined in the present disclosure, some Li atoms are distributed in a metallic transition layer of a lattice. That is, the Li atoms having a content of (1-2x-y)(1-a)/3 in Formula I have entered the lattice. The cathode active material of the present disclosure has better lattice integrity and more satisfactory cycling stability. According to some specific embodiments of the present disclosure, 1.85≤*η*≤2.1.

In the present disclosure, FWHM(104) and FWHM(003) may be obtained by testing using an X-ray diffractometer of model Smart Lab 9KW from Rigaku Corporation.

According to some embodiments of the present disclosure, the cathode active material may have a compaction density ranging from 2.7 g/cm³ to 3.2 g/cm³. For example, the compaction density may be 2.7 g/cm³, 2.8 g/cm³, 2.9 g/cm³, 3 g/cm³, 3.1 g/cm³, 3.2 g/cm³, etc., or may be a range composed of any of the above values. Thus, the energy density of the battery is improved.

According to some embodiments of the present disclosure, the compaction density of the cathode active material may be obtained by testing using a powder resistivity measurement system from Mitsubishi.

According to some embodiments of the present disclosure, the cathode active material includes a compound represented by Formula I: Li_{1+δ}(Niₓ₍₁₋ₐ₎Co_{y(1-a)}Li_{(1-2x-y)(1-a)/3}Mn_{(2-x-y)(1-a)/3}M¹ₐM²_{b})O_{(2+δ/2)}Nₙ Formula I, where 0.02≤δ≤0.08, 0.25≤x≤0.45, 0≤y≤0.1, 0≤a≤0.035, 0≤b≤0.04, 0≤n≤0.04, M¹ includes at least one of Al, Zr, Y, Mg, Ti, W, Si, Yb, Nb, Sc, Ca, La, Sr, or Y, M² includes at least one of B, Mg, Al, Ti, V, Sr, Y, Zr, Nb, Mo, Sc, Cr, La, Sr, or W, and N includes at least one of F, S, P, or O.

As an example, δ may be 0.002, 0.004, 0.006, 0.008, etc., or may be a range composed of any of the above values. According to some specific embodiments of the present disclosure, 0.03≤δ≤0.06.

As an example, x may be 0.25, 0.3, 0.35, 0.4, 0.45, etc., or may be a range composed of any of the above values.

As an example, y may be 0, 0.03, 0.05, 0.07, 0.1, etc., or may be a range composed of any of the above values.

As an example, a may be 0, 0.01, 0.02, 0.03, 0.035, etc., or may be a range composed of any of the above values. According to some specific embodiments of the present disclosure, 0.001≤a≤0.02.

As an example, b may be 0, 0.01, 0.02, 0.03, 0.04, etc., or may be a range composed of any of the above values. According to some specific embodiments of the present disclosure, 0.001≤b≤0.02.

As an example, n may be 0, 0.005, 0.01, 0.015, 0.02, etc., or may be a range composed of any of the above values. According to some specific embodiments of the present disclosure, 0≤n≤0.02.

In a second aspect of the present disclosure, a method for preparing a cathode active material is provided. The method includes: mixing a Ni source, a Co source, a Mn source, a complexing agent, and a precipitant to form a first mixed solution, stirring and performing co-precipitation on the first mixed solution, followed by drying, to obtain a lithium-rich manganese-based precursor, in which a pH of the first mixed solution ranges from 9 to 11.5, and a rotational speed of the stirring ranges from 500 rpm to 900 rpm; mixing the lithium-rich manganese-based precursor, a lithium source, and an M¹ source, and performing a first sintering on the mixture, to obtain a first in-process product; mixing the first in-process product, an M² source, and a solvent to form a second mixed solution, performing a solid-liquid separation, and drying a solid phase substance, to obtain a second in-process product, in which a solid-liquid ratio of the first in-process product to the solvent ranges from 0.5 g/mL to 3 g/mL; and performing a second sintering on the second in-process product, to obtain the cathode active material. A temperature of the second sintering is lower than or equal to a temperature of the first sintering. Thus, by controlling the pH and the rotational speed during the co-precipitation and the solid-liquid ratio during formation of the second mixed solution, soluble residual substances in micropores between the primary particles can be discharged to an outside of the secondary particles, in such a manner that more micropores are formed inside the secondary particles without destroying a lattice structure, obtaining the cathode active material that possesses both satisfactory cycling performance and higher volumetric energy density.

The method is described in detail below. Referring to FIG. 1, the method includes operations at blocks.

At S10, a Ni source, a Co source, a Mn source, a complexing agent, and a precipitant are mixed to form a first mixed solution, the first mixed solution is stirred, co-precipitation is performed, and drying is performed, to obtain a lithium-rich manganese-based precursor.

According to some embodiments of the present disclosure, the Ni source, the Co source, the Mn source, the complexing agent, and the precipitant are mixed to form the first mixed solution, and the co-precipitation is performed, to obtain a slurry. Aging, filter pressing, and drying are sequentially performed on the slurry, to obtain a lithium-rich manganese-based precursor.

According to some embodiments of the present disclosure, the precipitant includes at least one of NaOH, KOH, or LiOH.

According to some embodiments of the present disclosure, a pH of the first mixed solution may range from 9 to 11.5. For example, the pH of the first mixed solution may be 9, 9.5, 10, 10.5, 11, 11.5, etc., or may be a range composed of any of the above values.

According to some embodiments of the present disclosure, the rotational speed of the stirring may range from 500 rpm to 900 rpm. For example, the rotational speed of the stirring may be 500 rpm, 600 rpm, 700 rpm, 800 rpm, 900 rpm, etc., or may be a range composed of any of the above values.

By controlling the pH of the first mixed solution and the rotational speed of the stirring within the above ranges, the lithium-rich manganese-based precursor possesses both satisfactory multidirectionality and higher tap density, in such a manner that the primary particles of the cathode active material also possess satisfactory multidirectionality. During the battery cycling, the cathode active material after being soaked in the electrolyte solution can obtain more micropores. That is, the cathode active material can have the larger specific surface area with only a smaller increase in the porosity, obtaining the battery that possesses both satisfactory cycling performance and higher energy density.

According to some embodiments of the present disclosure, a temperature during a reaction of the co-precipitation may range from 50°C to 80°C. For example, the temperature during the reaction of the co-precipitation may be 50°C, 60°C, 70°C, 80°C, etc., or may be a range composed of any of the above values.

According to some embodiments of the present disclosure, a duration of the reaction of the co-precipitation ranges from 30 hours to 100 hours. For example, the duration of the reaction of the co-precipitation may be 30 hours, 50 hours, 70 hours, 90 hours, 100 hours, etc., or may be a range composed of any of the above values.

At S20, the lithium-rich manganese-based precursor, a lithium source, and an M¹ source are mixed, and a first sintering is performed on the mixture, to obtain a first in-process product.

According to some embodiments of the present disclosure, the lithium source may include at least one of lithium carbonate or lithium hydroxide.

According to some embodiments of the present disclosure, the M¹ source includes at least one of an oxide of M¹, a sulfide of M¹, a fluoride of M¹, a hydroxide of M¹, or a carbonate of M¹.

According to some embodiments of the present disclosure, 0≤n_{(M1)}/(n_{(Ni)}+n_{(Co)}+n_{(Mn)})≤0.04. For example, n_{(M1)}/(n_{(Ni)}+n_{(Co)}+n_{(Mn)}) may be 0, 0.01, 0.02, 0.03, 0.04, etc., or may be a range composed of any of the above values. According to some specific embodiments of the present disclosure, 0.001≤n_{(M1)}/(n_{(Ni)}+n_{(Co)}+n_{(Mn)})≤0.02.

According to some embodiments of the present disclosure, a heating rate V₁ of the first sintering may satisfy 1.3 °C/minute≤V₁≤10 °C/minute. For example, the heating rate V₁ may be 1.3 °C/minute, 3 °C/minute, 6 °C/minute, 8 °C/minute, 10 °C/minute, etc., or may be a range composed of any of the above values.

According to some embodiments of the present disclosure, the temperature of the first sintering is T₁, and satisfies 800°C≤T₁≤980°C. For example, the temperature of the first sintering may be 800°C, 840°C, 880°C, 920°C, 960°C, 980°C, etc., or may be a range composed of any of the above values.

According to some embodiments of the present disclosure, a duration of the first sintering is t₁, and satisfies 5 hours≤t₁≤15 hours. For example, the duration of the first sintering may be 5 hours, 7 hours, 9 hours, 11 hours, 13 hours, 15 hours, etc., or may be a range composed of any of the above values.

Thus, by controlling T₁, V₁, and t₁ of the first sintering within the above ranges, the primary particles can be simultaneously and uniformly generated, obtaining more micropore structures among the primary particles.

According to some embodiments of the present disclosure, 1.12≤n_{(Li)}/(n_{(Ni)}+n_{(Co)}+n_{(Mn)}+n_{(M1)})≤1.49. Thus, the lattice integrity of the cathode active material is improved, which improves the cycling stability of the cathode active material. Here, n represents a molar amount of a corresponding element.

As an example, n_{(Li)}/(n_{(Ni)}+n_{(Co)}+n_{(Mn)}+n_{(M1)}) may be 1.12, 1.15, 1.2, 1.25, 1.3, 1.35, 1.4, 1.45, 1.49, etc., or may be a range composed of any of the above values. Here, n represents the molar amount of the corresponding element.

At S30, the first in-process product, an M² source, and a solvent are mixed to form a second mixed solution, a solid-liquid separation is performed, and a solid phase substance is dried, to obtain a second in-process product, in which a solid-liquid ratio of the first in-process product to the solvent ranges from 0.5 g/mL to 3 g/mL.

According to some embodiments of the present disclosure, the first in-process product and the M² source are sequentially added to an aqueous solution to form the second mixed solution, the solid-liquid separation is performed to obtain the solid phase substance, and the solid phase substance is dried, to obtain the second in-process product.

It should be noted that, when the cathode active material contains no element M², an addition of the M² source is unnecessary.

According to some embodiments of the present disclosure, the solid-liquid ratio of the first in-process product to the solvent may be 0.5 g/mL, 1 g/mL, 1.5 g/mL, 2 g/mL, 2.5 g/mL, 3 g/mL, etc., or may be a range composed of any of the above values.

According to some specific embodiments of the present disclosure, the solid-liquid ratio of the first in-process product to the solvent ranges from 1.0 g/mL to 3 g/mL.

According to some embodiments of the present disclosure, a temperature of the second mixed solution may range from 5°C to 35°C. For example, the temperature of the second mixed solution may be 5°C, 10°C, 15°C, 20°C, 25°C, 30°C, 35°C, etc., or may be a range composed of any of the above values.

According to some embodiments of the present disclosure, said mixing the first in-process product, the M² source, and the solvent is performed in a time period ranging from 30 seconds to 1,200 seconds. For example, the time period may be 30 seconds, 100 seconds, 300 seconds, 500 seconds, 700 seconds, 900 seconds, 1,100 seconds, 1,200 seconds, etc., or may be a range composed of any of the above values. According to some specific embodiments of the present disclosure, said mixing the first in-process product, the M² source, and the solvent is performed in the time period ranging from 60 seconds to 600 seconds.

Thus, by controlling the solid-liquid ratio, the temperature of the second mixed solution and the time period for mixing the first in-process product, the M² source, and the solvent to form the second mixed solution within the above ranges, fillers in the micropores between the primary particles are washed away and discharged to the outside of the secondary particles, without destroying a crystal structure.

According to some embodiments of the present disclosure, 0≤n_{(M2)}/(n_{(Ni)}+n_{(Co)}+n_{(Mn)}+n_{(M1)})≤0.04. For example, n_{(M2)}/(n_{(Ni)}+n_{(Co)}+n_{(Mn)}+n_{(M1)}) may be 0, 0.01, 0.02, 0.03, 0.04, etc., or may be a range composed of any of the above values. According to some specific embodiments of the present disclosure, 0.001≤n_{(M2)}/(n_{(Ni)}+n_{(Co)}+n_{(Mn)}+n_{(M1)})≤0.02. Here, n represents the molar amount of the corresponding element.

According to some embodiments of the present disclosure, the M² source includes at least one of an oxide of M², a sulfide of M², a fluoride of M², a hydroxide of M², a carbonate of M², or an oxyhydroxide of M².

At S40, a second sintering is performed on the second in-process product, to obtain the cathode active material, in which a temperature of the second sintering is lower than or equal to a temperature of the first sintering.

According to some embodiments of the present disclosure, the second sintering is performed on the second in-process product in an oxygen-containing atmosphere, and sieving and an iron removal are performed on the sintered product, to obtain the cathode active material.

According to some embodiments of the present disclosure, the temperature of the second sintering is T₂, satisfying 300°C≤T₂≤800°C. For example, the temperature of the second sintering may be 300°C, 400°C, 500°C, 600°C, 700°C, 800°C, etc., or may be a range composed of any of the above values.

According to some embodiments of the present disclosure, a duration of the second sintering is t₂, satisfying 6 hours≤t₂≤20 hours. For example, the duration of the second sintering may be 6 hours, 10 hours, 14 hours, 18 hours, 20 hours, etc., or may be a range composed of any of the above values.

Thus, by controlling the temperature and the duration of the second sintering within the above ranges, a pore structure in the secondary particles can be well preserved, which reduces a risk of pore closure after re-sintering of the primary particles.

In summary, the cathode active material provided in the present disclosure has the following advantages.
(1) After being brought into contact with the electrolyte solution, the cathode active material provided in the present disclosure can have the larger specific surface area while maintaining the lower porosity, shortening the diffusion path of the lithium ions in the cathode active material and increasing the gram capacity of the cathode active material.
(2) The larger specific surface area of the cathode active material enables the sufficient contact between the cathode active material and the electrolyte solution, which can promote the interfacial reaction between the cathode active material and the electrolyte solution, and improve the cycling performance of the battery.
(3) After simulating a wetting process of the electrolyte solution, the average pore diameter of the cathode active material is smaller. These small pore diameters enable the cathode active material to have a larger specific surface area under a condition of lower porosity, obtaining the cathode active material that possesses both higher compaction density and satisfactory cycling performance.
(4) In a process of preparing the lithium-rich manganese-based precursor in the present disclosure, by controlling the pH of the first mixed solution and the rotational speed of the stirring, the lithium-rich manganese-based precursor possesses both satisfactory multidirectionality and higher tap density, in such a manner that the primary particles of the cathode active material also possess satisfactory multidirectionality. During the battery cycling, the cathode active material after being soaked in the electrolyte solution can obtain more micropores. That is, the cathode active material can have the larger specific surface area with only the smaller increase in the porosity, obtaining the battery that possesses both satisfactory cycling performance and higher energy density.
(5) In a process of preparing the cathode active material in the present disclosure, by controlling the solid-liquid ratio of the first in-process product to the solvent, the soluble residual substances in the micropores between the primary particles can be discharged to the outside of the secondary particles during the formation of the second in-process product, in such a manner that more micropores are formed inside the secondary particles without destroying the lattice structure, obtaining the cathode active material that possesses both satisfactory cycling performance and higher volumetric energy density.
(6) The cathode active material provided in the present disclosure has satisfactory lattice integrity, which can further improve the cycling performance of the battery.

In a third aspect of the present disclosure, a cathode plate is provided. The cathode plate includes the cathode active material in the first aspect of the present disclosure or a cathode active material prepared by the method in the second aspect of the present disclosure.

In a fourth aspect of the present disclosure, a battery is provided. The battery includes the cathode plate in the third aspect of the present disclosure. Thus, the battery possesses both higher volumetric energy density and satisfactory cycling performance.

In a fifth aspect of the present disclosure, an electrical device is provided. The electrical device includes the battery in the fourth aspect of the present disclosure.

Examples of the present disclosure are described in detail below. The examples described below are exemplary and are only used to explain the present disclosure, and should not be construed as limiting the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

### Example 1

### 1. Preparation of cathode active material

(1) Under nitrogen protection, nickel sulfate, cobalt sulfate, manganese sulfate (a molar ratio of Ni:Co:Mn=33:5:62), ammonia water having a mass fraction of 25%, and a precipitant were introduced into a reaction kettle in a co-current manner to carry out a co-precipitation reaction. The precipitant was a 2 mol/L NaOH aqueous solution. A temperature of the co-precipitation reaction was 60°C. A rotational speed was 550 rpm. A duration was 50 hours. A pH was 10.2. After naturally cooling to a room temperature, crushing and sieving were performed, to obtain a lithium-rich manganese-based precursor.
(2) The lithium-rich manganese-based precursor, lithium carbonate, and TiO₂ were mixed. A first sintering was performed. A sintering atmosphere was air. A heating rate V₁=5 °C/minute. t₁=10 hours. T₁=880°C. After naturally cooling to the room temperature, the crushing and the sieving were performed, to obtain a first in-process product.
(3) The first in-process product was mixed with deionized water and AlF to form a second mixed solution. A solid-liquid ratio of the first in-process product to the deionized water was 2 g/mL. A temperature of the second mixed solution was 12°C. A time period for mixing the first in-process product, the M² source, and the solvent to form the second mixed solution was 300 seconds. After filter pressing and vacuum drying, a second in-process product was obtained.
(4) A second sintering was performed on the second in-process product in an air atmosphere. T₂=440°C. t₂=8 hours. Then, sieving and an iron removal treatment were performed. After naturally cooling to the room temperature, Li_{1.05}(Ni_{0.286}Co_{0.043}Li_{0.126}Mn_{0.538}Ti_{0.007})Al_{0.012}O_{2.025}F_{0.012} was obtained.

### 2. Preparation of cathode plate

The cathode active material Li_{1.05}(Ni_{0.286}Co_{0.043}Li_{0.126}Mn_{0.538}Ti_{0.007})Al_{0.012}O_{2.025}F_{0.012} prepared in Example 1, polyvinylidene fluoride (PVDF), and acetylene black were mixed at a mass ratio of 90:5:5 with an appropriate amount of N-methylpyrrolidone (NMP) to form a uniform slurry. The slurry was coated on an aluminum foil, dried, and then stamped into a cathode plate having a diameter of 12 mm and a thickness of 120 µm under a pressure of 100 MPa. Subsequently, the cathode plate was placed in a vacuum drying oven and dried at 120°C for 12 hours.

### 3. Preparation of anode plate

A Li metal sheet having a diameter of 17 mm and a thickness of 1 mm was used as an anode.

### 4. Separator

A polyethylene porous membrane having a thickness of 25µm.

### 5. Electrolyte solution

An equal-volume mixed solution of ethylene carbonate (EC) and diethyl carbonate (DEC) with 1 mol/L of LiPF₆ as an electrolyte.

### 6. Battery assembly

The cathode plate, the separator, the anode plate, and the electrolyte solution were assembled into a 2025-type coin cell in an Ar gas glove box where both water content and oxygen content were less than 5 ppm.

For a preparation process of the cathode active material in Example 2 to Example 9 and Comparative Example 1 to Comparative Example 3, reference can be made to Table 1. A method for preparing a battery from the cathode active material is the same as in Example 1, with differences detailed in Table 1.

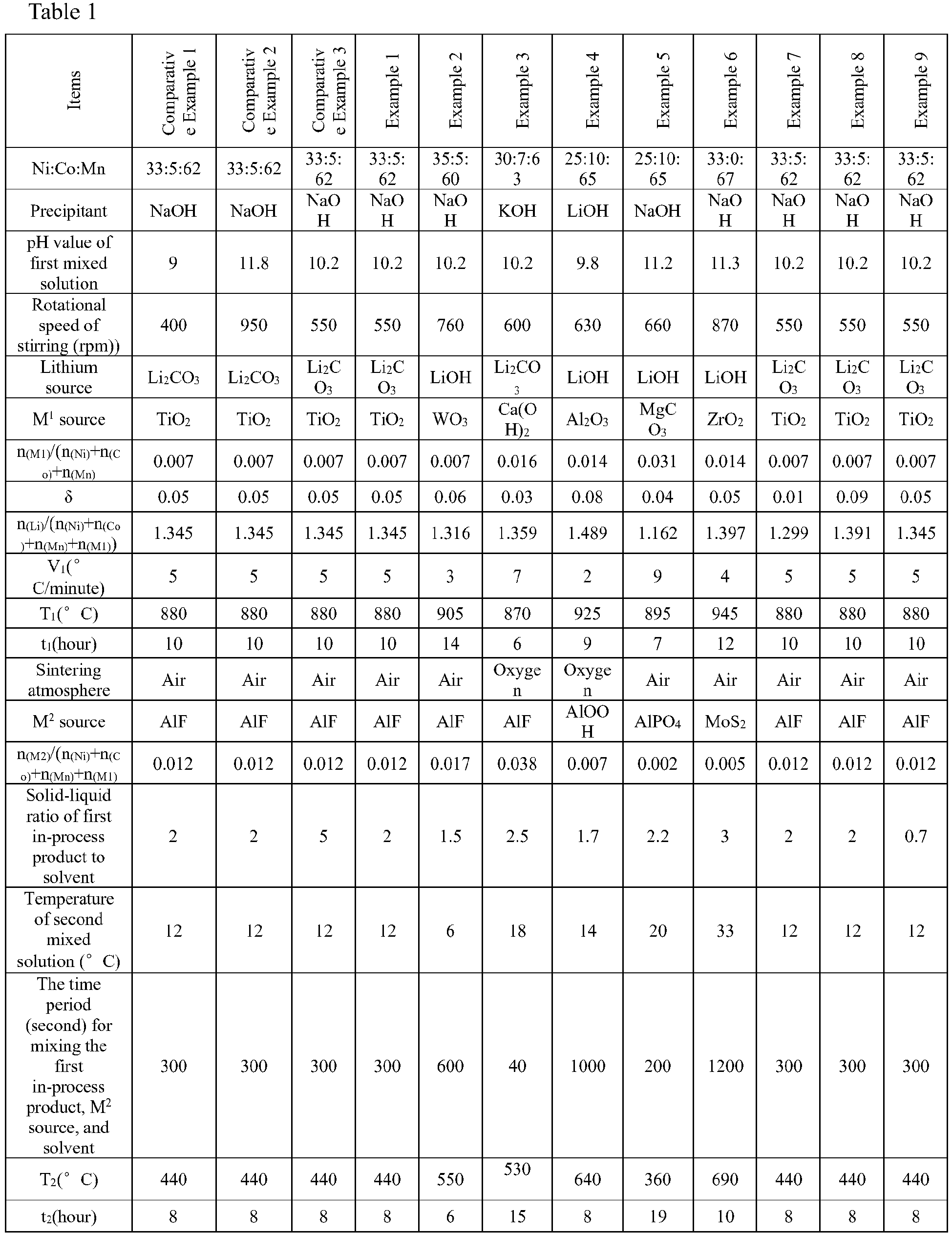

### Comparative Example 1

The preparation process of the cathode active material in Comparative Example 1 was the same as that in Example 1, except that the pH of the first mixed solution was 9.0 and the rotational speed was 400 rpm.

### Comparative Example 2

The preparation process of the cathode active material in Comparative Example 2 was the same as that in Example 1, except that the pH of the first mixed solution was 11.8 and the rotational speed was 950 rpm.

### Comparative Example 3

The preparation process of the cathode active material in Comparative Example 3 was the same as that in Example 1, except that the solid-liquid ratio of the first in-process product to the deionized water was 5 g/mL.

### Performance test

### 1. BET specific surface area

In the present disclosure, the test method for the BET specific surface area included: soaking the cathode active material in the acidic solution for 2 hours, in which the weight ratio of the cathode active material to the acidic solution was 1:10, and the pH of the acidic solution was 5.5; performing drying at 120°C in a vacuum atmosphere subsequent to a completion of the soaking; and performing testing using a specific surface area analyzer of model Tristar 3020 from Micromeritics.

### 2. Porosity

A pore volume was obtained by testing using the specific surface area analyzer of model Tristar 3020 from Micromeritics. A skeleton volume was obtained using a true density analyzer of AccuPyc 1345 model from Micromeritics. Porosity=pore volume/(pore volume+skeleton volume)×100%

### 3. Average pore diameter

The average pore diameter was obtained by testing using the specific surface area analyzer of model Tristar 3020 from Micromeritics.

### 4. Proportion of pores having a pore diameter smaller than or equal to 10 nm

A pore diameter distribution was obtained by testing using the specific surface area analyzer of model Tristar 3020 from Micromeritics, specifically the proportion of pores having the pore diameter smaller than or equal to 10 nm.

### 5. Compaction density

The compaction density was obtained by testing using a powder resistivity measurement system from Mitsubishi.

### 6. XRD

XRD was obtained by testing using an X-ray diffractometer of model Smart Lab 9KW from Rigaku Corporation. 2θ for calculating an FWHM of a (003) peak ranged from 17.5° to 19.5°. 2θ for calculating an FWHM of a (104) peak ranged from 43.5° to 45.5°.

### 7. First discharge specific capacity

An initial discharge specific capacity was obtained as follows. The coin cell was assembled and then let stand for 2 hours. After an open circuit voltage was stable, the cathode was charged to a cut-off voltage of 4.55 V at a current density of 25 mA/g, with a constant-voltage charge cut-off current of 0.05 C, and was then discharged to a cut-off voltage of 2.5 V at the same current density.

### 8. Average discharge voltage

Average discharge voltage=discharge energy during discharge/discharge capacity during the discharge.

### 9. Volumetric energy density

Volumetric energy density=powder compaction density×first discharge specific capacity×average discharge voltage.

### 10. Cycle capacity retention rate

After first discharge and two cycles of 0.1 C charge-discharge were performed on the coin cell, the current density for the cathode was changed to 250 mAh/g, the charge cut-off voltage was 4.55 V, and the constant-voltage charge cut-off current was 0.05 C. Then, the cathode was discharged to the cut-off voltage of 2.5 V at the same current density to obtain a first cycle capacity. After 50 cycles at one time, a 50th cycle capacity was obtained. Cycle capacity retention rate=50th cycle capacity/first cycle capacity×100%.

Test results of the cathode active materials and batteries in Example 1 to Example 9 and Comparative Example 1 to Comparative Example 3 are shown in Table 2.

**Table 2**

| | **Cathode active material** | | | | | | | | | **Battery** | | | |
|---|---|---|---|---|---|---|---|---|---|---|---|---|---|
| | **Chemical formula** | **FW HM (003)** | **FW HM (104)** | ***η*** | **Compaction density (g/cm³)** | **BET (m²/g)** | **Porosity (%)** | **Average pore diameter (nm)** | **Proportion of pores <10 nm (%)** | **First discharge specific capacity** | **Average discharge voltage** | **Volumetric energy density** | **Capacity retention rate** |
| | | | | | | | | | | **0.1C(m Ah/g)** | **0.1C(V)** | **(Wh/L)** | **50 cycles at 45°C (%)** |
| **Example 1** | Li_{1.05}(Ni_{0.286}Co_{0.043}Li_{0. 126}Mn_{0.538}Ti_{0.007})Al_{0.01 2}O_{2.025}F_{0.012} | 0.21 | 0.414 | 1.97 | 2.96 | 2.89 | 4.17 | 13 | 77.5 | 238.6 | 3.755 | 2652 | 97.8 |
| **Example 2** | Li_{1.06}(Ni_{0.309}Co_{0.044}Li_{0. 110}Mn_{0.530}W_{0.007})Al_{0.01 7}O_{2.030}F_{0.017} | 0.189 | 0.403 | 2.13 | 3.07 | 2.06 | 3.47 | 15 | 69.4 | 226.3 | 3.792 | 2634 | 97.4 |
| **Example 3** | Li_{1.03}(Ni_{0.253}Co_{0.059}Li_{0. 139}Mn_{0.532}Ca_{0.016})Al_{0.0 38}O_{2.015}F_{0.038} | 0.21 | 0.492 | 2.34 | 3.04 | 3.16 | 4.98 | 9 | 83.2 | 227.2 | 3.751 | 2591 | 96.9 |
| **Example 4** | Li_{1.08}(Ni_{0.205}Co_{0.082}Li_{0.164}Mn_{0.534}Al_{0.014})Al_{0.007}O_{2.047} | 0.209 | 0.395 | 1.89 | 3.02 | 2.57 | 3.9 | 21 | 58.7 | 234.9 | 3.728 | 2645 | 95.7 |
| **Example 5** | Li_{1.04}(Ni_{0.404}Co_{0.019}Li_{0.056}Mn_{0.51/}Mg_{0.003})Al_{0.002}O_{2.020}P_{0.002} | 0.17 | 0.308 | 1.81 | 2.86 | 1.75 | 3.28 | 24 | 50.4 | 223.3 | 3.799 | 2426 | 97.3 |
| **Example 6** | Li_{1.05}(Ni_{0.281}Co_{0.}Li_{0.145}Mn_{0.570}Zr_{0.004})Mo_{0.005}O_{2.025}S_{0.011} | 0.199 | 0.438 | 2.2 | 3.16 | 2.84 | 4.29 | 19 | 57.3 | 223.3 | 3.799 | 2681 | 96.4 |
| **Example 7** | Li_{1.01}(Ni_{0.286}Co_{0.043}Li_{0.126}Mn_{0.538}Ti_{0.007})Al_{0.012}O_{2.005}F_{0.012} | 0.191 | 0.463 | 2.42 | 2.74 | 3.42 | 6.24 | 22 | 72.3 | 216.4 | 3.743 | 2219 | 95.4 |
| **Example 8** | Li_{1.09}(Ni_{0.286}Co_{0.043}Li_{0. 126}Mn_{0.538}Ti_{0.007})Al_{0.01 2}O_{2.045}F_{0.012} | 0.187 | 0.354 | 1.89 | 3.14 | 1.77 | 2.67 | 17 | 51.2 | 211.6 | 3.746 | 2489 | 94.8 |
| **Example 9** | Li_{1.05}(Ni_{0.286}Co_{0.043}Li_{0. 126}Mn_{0.538}Ti_{0.007})Al_{0.01 2}O_{2.025}F_{0.012} | 0.189 | 0.403 | 2.13 | 3.08 | 1.86 | 2.91 | 25 | 48.6 | 208.6 | 3.744 | 2405 | 94.3 |
| **Comparative Example 1** | Li_{1.05}(Ni_{0.286}Co_{0.043}Li_{0. 126}Mn_{0.538}Ti_{0.007})Al_{0.01 2}O_{2.025}F_{0.012} | 0.21 | 0.414 | 1.97 | 2.57 | 4.36 | 6.75 | 37 | 42.8 | 178.2 | 3.78 | 1860 | 93.4 |
| **Comparative Example 2** | Li_{1.05}(Ni_{0.286}Co_{0.043}Li_{0. 126}Mn_{0.538}Ti_{0.007})Al_{0.01 2}O_{2.025}F_{0.012} | 0.209 | 0.467 | 2.23 | 3.24 | 1.55 | 2.41 | 7 | 86 | 188.3 | 3.875 | 2364 | 94.9 |
| **Comparative Example 3** | Li_{1.05}(Ni_{0.286}Co_{0.043}Li_{0. 126}Mn_{0.538}Ti_{0.007})Al_{0.01 2}O_{2.025}F_{0.012} | 0.187 | 0.478 | 2.56 | 2.94 | 4.21 | 6.62 | 15 | 62.3 | 202.7 | 3.822 | 2301 | 93.3 |

Comparisons between Example 1 to Example 9 and Comparative Example 1 to Comparative Example 3 show that, during preparation of the cathode active material of the present disclosure, by controlling the pH of the first mixed solution, the rotational speed of the stirring, and the solid-liquid ratio of the first in-process product to the solvent, the prepared cathode active material, after being soaked in the acidic solution, has the smaller average pore diameter and a larger proportion of pores having the pore diameter smaller than 10 nm. Thus, the cathode active material has the smaller porosity and the larger BET specific surface area, and the first discharge specific capacity, the average discharge voltage, the volumetric energy density, and the cycle capacity retention rate of the battery are all higher, indicating that the cathode active material provided in the present disclosure can not only increase the volumetric energy density of the battery, but also enable more sufficient contact between the cathode active material and the electrolyte solution during charge and discharge of the battery. In this way, the interfacial reaction between the cathode active material and the electrolyte solution is promoted, and the cycling performance of the battery is improved.

The comparison between Example 1 and Comparative Example 1 shows that, when the rotational speed of the stirring is too low, although the specific surface area of the cathode active material is larger, the porosity of the cathode active material is also larger, resulting in the lower volumetric energy density of the battery.

The comparison between Example 1 and Comparative Example 2 shows that, when the rotational speed of the stirring is too high, both the BET specific surface area and the porosity of the cathode active material are smaller, resulting in a lower first discharge capacity of the battery.

The comparison between Example 1 and Comparative Example 3 shows that, when the solid-liquid ratio of the first in-process product to the solvent is too large, both the BET specific surface area and the porosity of the cathode active material are larger, and thus the battery having the higher volumetric energy density, the higher first discharge specific capacity, and the higher cycle capacity retention rate cannot be obtained.

Example 1 and Example 7 to Example 9 show that, during the preparation of the cathode active material, by adjusting an addition amount of the lithium source (i.e., n_{(Li)}/(n_{(Ni)}+n_{(Co)}+n_{(Mn)}+n_{(M1)})), a Li content in the cathode active material can be adjusted, and thus a ratio of FWHM(104)/FWHM(003) can be controlled, to obtain the cathode active material having better lattice integrity, improving the cycle capacity retention rate of the battery.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A cathode active material, wherein the cathode active material is secondary particles formed by agglomerated primary particles, the secondary particles having pores, wherein the cathode active material, after being soaked in an acidic solution for 2 hours, has a BET specific surface area ranging from 1.75 m²/g to 4 m²/g and a porosity ranging from 2.6% to 6.5%, wherein a weight ratio of the cathode active material to the acidic solution is 1:10, and wherein a pH of the acidic solution is 5.5.

2. The cathode active material according to claim 1, wherein the pores of the secondary particles of the cathode active material after being soaked in the acidic solution have an average pore diameter ranging from 9 nm to 25 nm.

3. The cathode active material according to claim 2, wherein a proportion of pores having a pore diameter smaller than or equal to 10 nm ranges from 50% to 80%.

4. The cathode active material according to any one of claims 1 to 3, wherein the cathode active material has a compaction density ranging from 2.7 g/cm³ to 3.2 g/cm³.

5. The cathode active material according to claim 4, satisfying: *η*=FWHM(104)/FWHM(003), where 1.75≤*η*≤2.8, and optionally, 1.85≤*η*≤2.1, wherein:
FWHM(104) is a full width at half maximum of a diffraction peak (104) in an X-ray diffraction pattern, the diffraction peak (104) corresponding to a 2θ value in a range of 43.5° to 45.5°; and
FWHM(003) is a full width at half maximum of a diffraction peak (003) in the X-ray diffraction pattern, the diffraction peak (003) corresponding to a 2θ value in a range of 17.5° to 19.5°.

6. The cathode active material according to claim 1, comprising a compound represented by Formula I:
Li_{1+δ}(Niₓ₍₁₋ₐ₎Co_{y(1-a)}Li_{(1-2x-y)(1-a)/3}Mn_{(2-x-y)(1-a)/3}M¹ₐM²_{b})O_{(2+δ/2)}Nₙ Formula I, where:
0.02≤δ≤0.08, 0.25≤x≤0.45, 0≤y≤0.1, 0≤a≤0.035, 0≤b≤0.04, 0≤n≤0.04;
M¹ comprises at least one of Al, Zr, Y, Mg, Ti, W, Si, Yb, Nb, Sc, Ca, La, Sr, or Y;
M² comprises at least one of B, Mg, Al, Ti, V, Sr, Y, Zr, Nb, Mo, Sc, Cr, La, Sr, or W; and
N comprises at least one of F, S, P, or O.

7. The cathode active material according to claim 6, satisfying at least one of the following conditions: $0.03 \leq δ \leq 0.06 ;$ $0.001 \leq a \leq 0.02 ;$ $0.001 \leq b \leq 0.02 ;$ or $0 \leq n \leq 0.02 .$

8. The cathode active material according to claim 6, wherein at least part of a surface of each of the secondary particles is coated with a coating layer, and preferably, the coating layer comprises element M².

9. A method for preparing a cathode active material, the method comprising:
mixing a Ni source, a Co source, a Mn source, a complexing agent, and a precipitant to form a first mixed solution, stirring and performing co-precipitation on the first mixed solution, followed by drying, to obtain a lithium-rich manganese-based precursor, wherein a pH of the first mixed solution ranges from 9 to 11.5, and wherein a rotational speed of the stirring ranges from 500 rpm to 900 rpm;
mixing the lithium-rich manganese-based precursor, a lithium source, and an M¹ source, and performing a first sintering on the mixture, to obtain a first in-process product;
mixing the first in-process product, an M² source, and a solvent to form a second mixed solution, performing a solid-liquid separation, and drying a solid phase substance, to obtain a second in-process product, wherein a solid-liquid ratio of the first in-process product to the solvent ranges from 0.5 g/mL to 3 g/mL; and
performing a second sintering on the second in-process product, to obtain the cathode active material, wherein a temperature of the second sintering is lower than or equal to a temperature of the first sintering.

10. The method according to claim 9, wherein the solid-liquid ratio of the first in-process product to the solvent ranges from 1.0 g/mL to 3 g/mL.

11. The method according to claim 9, satisfying at least one of the following conditions:
a temperature of the second mixed solution ranges from 5°C to 35°C; or
said mixing the first in-process product, the M² source, and the solvent is performed in a time period ranging from 30 seconds to 1,200 seconds, and optionally 60 seconds to 600 seconds.

12. The method according to claim 9, wherein 1.12≤n_{(Li)}/(n_{(Ni)}+n_{(Co)}+n_{(Mn)}+n_{(M1)})≤1.49.

13. The method according to claim 9, wherein 0≤n_{(M2)}/(n_{(Ni)}+n_{(Co)}+n_{(Mn)}+n_{(M1)})≤0.04, and optionally, 0.001≤n_{(M2)}/(n_{(Ni)}+n_{(Co)}+n_{(Mn)}+n_{(M1)})≤0.02.

14. The method according to claim 9, satisfying at least one of the following conditions:
the temperature of the first sintering is T₁, satisfying 800°C≤T₁≤980°C;
a duration of the first sintering is t₁, satisfying 5 hours≤t₁≤15 hours ; or
a heating rate of the first sintering is V₁, satisfying 1.3 °C/minute≤V₁≤10 °C/minute.

15. The method according to claim 9, satisfying at least one of the following conditions:
the temperature of the second sintering is T₂, satisfying 300°C≤T₂≤800°C; or
a duration of the second sintering is t₂, satisfying 6 hours ≤t₂≤20 hours.

16. A cathode plate, comprising:
the cathode active material according to any one of claims 1 to 8; or
a cathode active material prepared by the method according to any one of claims 9 to 15.

17. A battery, comprising the cathode plate according to claim 16.

18. An electrical device, comprising the battery according to claim 17.
